Europäisches Patentamt

European Patent Office

Office européen des brevets

(11) Veröffentlichungsnummer: **0 074 688**
**B1**

(12) **EUROPÄISCHE PATENTSCHRIFT**

(45) Veröffentlichungstag der Patentschrift:
05.12.84

(21) Anmeldenummer: **82201117.7**

(22) Anmeldetag: **09.09.82**

(51) Int. Cl.³: **H 04 N 9/491**

(54) Schaltungsanordnung zum Aufzeichnen eines Farbvideosignals.

(30) Priorität: **14.09.81 DE 3136347**

(43) Veröffentlichungstag der Anmeldung:
**23.03.83 Patentblatt 83/12**

(45) Bekanntmachung des Hinweises auf die Patenterteilung:
**05.12.84 Patentblatt 84/49**

(84) Benannte Vertragsstaaten:
**AT DE FR GB**

(56) Entgegenhaltungen:
**EP - A - 0 005 955**

**RADIOSCHAU, Heft 2, 1970 "FAM - ein spezielles Farbfernseh-Bildaufzeichungsverfahren für einfache Magnetbandgeräte" VERLAG ERB, Wien Seiten 78,79 FUNKSCHAU, Heft 14, 1971, "SChaltungstechnik der FAM-Farbsignalaufzeichung", FRANZIS VERLAG, München, Seiten 431-434**

(73) Patentinhaber: **Philips Patentverwaltung GmbH, Bilstrasse 80, D-2000 Hamburg 28 (DE)**

(84) Benannte Vertragsstaaten: **DE**

(73) Patentinhaber: **N.V. Philips' Gloeilampenfabrieken, Groenewoudseweg 1, NL-5621 BA Eindhoven (NL)**

(84) Benannte Vertragsstaaten: **FR GB AT**

(72) Erfinder: **Rehfeldt, Karl-Heinz, Harksheider Weg 95, D-2085 Quickborn (DE)**

(74) Vertreter: **Hartmann, Heinrich, Dipl.-Ing. et al, Philips Patentverwaltung GmbH Bilstrasse 80 Postfach 10 51 49, D-2000 Hamburg 28 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Schaltungsanordnung zum Aufzeichnen eines aus einem Helligkeitssignal und zwei abwechselnd übertragenen Farbdifferenzsignalen bestehenden Farbvideosignals durch Frequenzmodulation auf einem Träger, insbesondere einem Magnetband, wobei die Aufzeichnung im Bereich der abfallenden Flanke der Frequenz-Amplituden-Übertragungskurve erfolgt.

Solche Signale werden vorzugsweise nach dem sogenannten Timeplex-Verfahren derart aufgezeichnet, dass während einer wenigstens annähernd dem Hinlauf der Zeilenablenkung entsprechenden Zeit das Helligkeitssignal aufgezeichnet wird, während im Rücklaufintervall ein Farbdifferenzsignal in zeitlicher Kompression aufgezeichnet wird. Die Länge der Aufzeichenzeiten und die Kompression können so gewählt werden, dass für das Helligkeitssignal und für die Farbdifferenzsignale der gleiche Frequenzbereich in Anspruch genommen wird. Bei der Wiedergabe ist eine entsprechende zeitliche Expansion der Farbdifferenzsignale und eine Speicherung über eine Zeilendauer erforderlich, so dass dann die drei für ein Farbbild erforderlichen Signale in jeder Zeile wieder gleichzeitig zur Verfügung stehen.

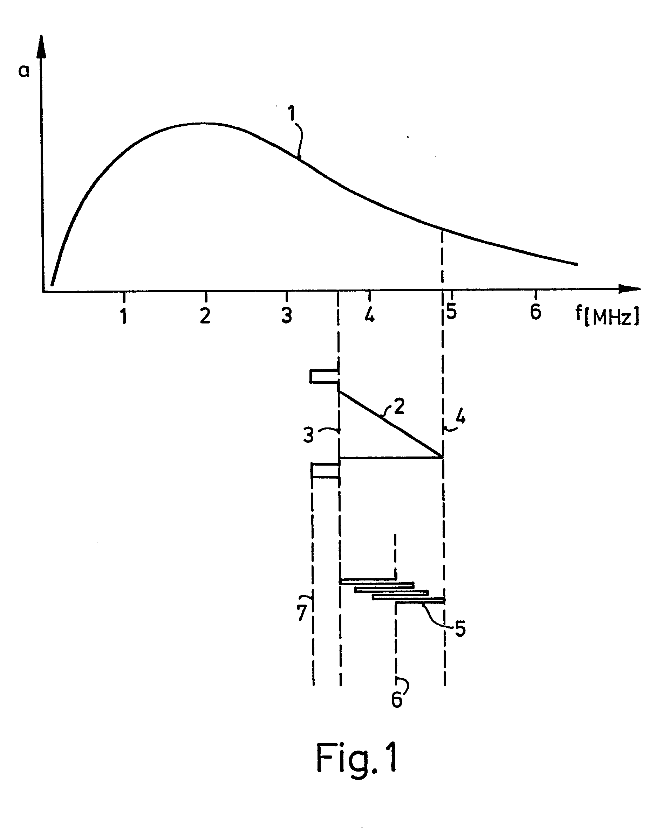

Insbesondere bei der Aufzeichnung solcher Signale in Frequenzmodulation mit einem Magnetkopf auf einem Magnetband ergibt sich bei der Aufzeichnung auf das Band eine Übertragungskurve, wie sie in Fig. 1 qualitativ dargestellt ist: Sehr niedrige Modulationsfrequenzen unter 1 MHz werden mit kleiner Amplitude aufgezeichnet. Im Bereich von 1 bis 1,5 MHz wird eine Maximalamplitude erreicht, und nach höheren Frequenzen ergibt sich ein mehr oder weniger gleichmässiger Abfall. Um auch feinere Bilddetails aufzeichnen zu können, müssen auch Seitenbandfrequenzen von z.B. 3 MHz aufgezeichnet werden können. Anderseits muss auch die Gleichstromkomponente der Grauwerte zwischen Schwarz und Weiss ausreichend gut aufgezeichnet werden können. Man kann daher gemäss Fig. 1 den Hub der Frequenzmodulation für das Videosignal zwischen 3,75 und 4,8 MHz wählen. Dann wird das untere Seitenband gut aufgezeichnet, während das obere Seitenband mehr oder weniger durch die Übertragungskurve 1 teilweise abgeschnitten wird. Ein Grauwertvideosignal entsprechend der Kurve 2 liegt dann zwischen einem Schwarzwert bei 3,75 MHz entsprechend der gestrichelten Linie 3 und einem Weissspitzenwert bei 4,8 MHz entsprechend der gestrichelten Linie 4, wobei der Amplitudenwert a der Übertragungskurve 1 für den Impulsscheitel etwa doppelt so hoch ist wie für den Weissspitzenwert.

Bei einem normalen Farbdifferenzsignal (R-Y) bzw. (B-Y) ist dann bei der üblichen Zuordnung und Gewinnung aus einer Matrixschaltung und nach Pegelkorrektur und Klemmung auf Unbunt, z.B. einen mittleren Grauwert, die Amplitudenlage gemäss Kurve 5 derart, dass die Farbdifferenzsignale für die dunkleren Farben wie Purpur, Rot und Blau etwa dort liegen, wo bei dem Helligkeitssignal 2 die mittleren bis helleren Grauwerte bis hin zu Weiss aufgezeichnet und übertragen werden.

Der Erfindung liegt die Erkenntnis zugrunde, dass bei so aufgezeichneten Farbdifferenzsignalen sich in den genannten, vom Auge dunkler empfundenen Farben ein stärkeres Rauschen zeigt, das dadurch verursacht wird, dass bei der erwähnten Aufzeichnungsart diese Farbennutzsignale mit einer reduzierten Amplitude ausgelesen werden. Das führt zu einem ebenfalls reduzierten Nutzsignal/Rausch-Verhältnis. Es liegt somit die Aufgabe vor, das Aufzeichenverfahren derart zu verbessern, dass dieses störende Rauschen vermindert ist.

Diese Aufgabe wird nach der Erfindung dadurch gelöst, dass die Farbdifferenzsignale mit negativer Polarität derart aufgezeichnet werden, dass die Amplitudenwerte der hellen Farben wie Gelb, Cyan und Grün bei einem höheren Frequenzwert und damit bei niedrigeren Werten der Frequenz-Amplituden-Übertragungskurve aufgezeichnet werden und dass die dunkleren Farben wie Purpur, Rot und Blau bei höheren Werten der Frequenz-Amplituden-Übertragungskurve aufgezeichnet werden.

Untersuchungen, die zur Erfindung geführt haben, haben gezeigt, dass bei dieser Aufzeichnung mit umgekehrter Polarität die zu den dunkleren Farben gehörenden Signalwerte mit grösserer Amplitude und demzufolge mit geringerem Rauschen wiedergegeben werden. Die den helleren Farbwerten entsprechenden Signalwerte werden dann zwar mit geringerer Amplitude und demzufolge grösserem Rauschen wiedergegeben. Es hat sich jedoch gezeigt, dass dieses prozentual grössere Rauschen bei der Wiedergabe der helleren Farben wesentlich weniger störend in Erscheinung tritt als bei den dunkleren Farben.

Bei einer Aufzeichnung nach der Erfindung liegen also die Amplitudenwerte der dunkleren Farbsignale dort, wo auf der Kurve 2 in Fig. 1 die helleren Grauwerte von der Mitte des Aussteuerungsbereiches zwischen den Linien 3 und 4 nach rechts bis hin zur Linie 4 liegen, welchem Bereich ein niedrigerer Amplitudenwert a der Kurve 1 zugeordnet ist. Demgegenüber werden die dunkleren Farbwerte in dem Bereich zwischen der Mitte und der Linie 3 aufgezeichnet, wozu die entsprechend höheren Amplitudenwerte a der Kurve 1 gehören.

Die Erfindung wird nachstehend anhand der Zeichnung näher erläutert, die in

Fig. 1 die bereits erörterte Übertragungskurve 1 mit der zugeordneten Lage der Signale zeigt, während

Fig. 2 eine Verarbeitungsschaltung nach der Erfindung zum Aufzeichnen des Helligkeitssignals und der Farbdifferenzsignale auf ein Magnetband, und

Fig. 3 eine Verarbeitungsschaltung nach der Erfindung darstellen, mit der die aufgezeichneten Signale wieder zurückgewonnen werden können.

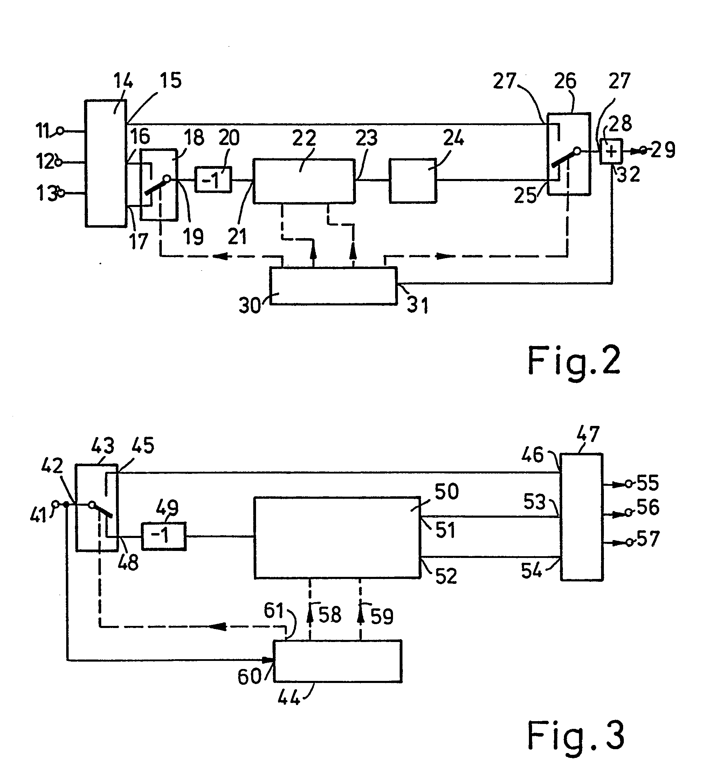

In Fig. 2 werden von Klemmen 11, 12 und 13 die Farbsignale R, G und B für Rot, Grün und Blau den drei Eingängen einer Matrixschaltung 14 zugeführt, in der die Signale so kombiniert werden, dass am ersten Ausgang 15 das Helligkeitssignal Y, am zweiten Ausgang 16 das rote Farbdifferenzsignal (R-Y) und am dritten Ausgang 17 das blaue Farbdifferenzsignal (B-Y) erhalten werden. Die Farbdifferenzsignale werden den Eingängen eines mit halber Zeilenfrequenz betätigten Umschalters 18 zugeführt, so dass sie an dessen Ausgang 19 von Zeile zu Zeile abwechselnd auftreten.

Nach der Erfindung wird nun das Vorzeichen dieser Farbdifferenzsignale in der Stufe 20 derart umgekehrt, dass an deren Ausgang abwechselnd die Farbdifferenzsignale − (R-Y) und − (B-Y) auftreten.

Die der Stufe 18 zugeführten Farbdifferenzsignale können auch durch Demodulation aus einem empfangenen Farbvideosignal erhalten sein, wobei dann die Farbsignale R, G und B in einer der Matrix 14 entsprechenden Anordnung senderseitig verarbeitet werden. Wenn die Matrix 14 in einem Videoaufzeichnungsgerät vorhanden ist, können in ihr auch Polaritätsumkehrstufen vor den Ausgängen 16 und 17 vorhanden sein, so dass dann die Stufe 20 entbehrlich ist.

Die erhaltenen Farbdifferenzsignale mit umgekehrten Vorzeichen werden dem Eingang 21 einer Kompressionsstufe 22 zugeführt, in der sie in an sich bekannter Weise während der Zeilendauer gespeichert und dann in zeitlicher Kompression während der Austastzeit am Ausgang 23 wiedergegeben werden. Die so erhaltenen Farbdifferenzsignale haben in der Regel eine den Aussteuerungsbereich zwischen den Linien 3 und 4 in Fig. 1 übersteigende Amplitude; sie werden daher in einer Korrektur- und Klemmstufe 24 in der Amplitude auf den Aussteuerungsbereich der Grauwertsignale des Helligkeitssignals 2 zwischen den Linien 3 und 4 korrigiert, und ihr Mittelwert wird vorzugsweise auf einen Unbuntwert gemäss der gestrichelten Linie 6 in Fig. 1 verschoben, der in der Mitte zwischen den Linien 3 und 4 liegt. Das so gebildete Signal wird dann einem Eingang 25 eines Intervallschalters 26 zugeführt, an dessen anderem Eingang 27 das Helligkeitssignal liegt. Die Eingänge 25 und 26 sind mit den Kontakten eines Umschalters verbunden, dessen Ausgang mit dem ersten Eingang 27 einer Additionsstufe 28 verbunden ist, deren Ausgang das z.B. durch einen Videorekorder aufzuzeichnende, zusammengesetzte Signal an eine Ausgangsklemme 29 liefert.

Eine Impulserzeugerstufe 30 liefert dabei die Steuergrössen zur Betätigung der Umschalter 18 und 26 sowie der Speicher- und Kompressionsstufe 22. An einem Ausgang 31 liefert sie ausserdem einen verkürzten und ggf. verschobenen Synchronimpuls, der einem Eingang 32 der Additionsstufe 28 zugeführt wird. Der Schalter 26 wird entsprechend dem Timeplex-Verfahren so gesteuert, dass das Helligkeitssignal während der normalen Zeilenabtastdauer und die zeitlich komprimierten Farbdifferenzsignale, entsprechend der Wirkung des Schalters 18 abwechselnd, während der Austastzeit zur Additionsstufe 28 übertragen werden.

Ein von dem Aufzeichnungsgerät, z.B. einem Magnetbandvideorekorder, wiedergegebenes Signal wird gemäss Fig. 3 einer Klemme 41 und von dort dem Eingang 42 eines Umschalters 43 zugeführt, der dem Umschalter 26 entspricht und entsprechend dem Zeilenhinlauf und der Austastzeit von einer Impulsstufe 44 gesteuert wird. Das Helligkeitssignal wird vom Ausgang 45 des Umschalters 43 dem Eingang 46 einer Dematrixschaltung 47 zugeführt. Das Farbdifferenzsignal wird vom Ausgang 48 des Umschalters 43 über eine nach der Erfindung vorgesehene Polaritätsumkehrstufe 49 einer Schaltungsanordnung 50 zugeführt, in der eine Speicherung und Expansion derart erfolgt, dass die von der Klemme 41 von Zeile zu Zeile abwechselnd zugeführten Farbdifferenzsignale (R-Y) und (B-Y) nun an den Ausgängen 51 und 52 dauernd und gleichzeitig auftreten und so den Eingängen 53 bzw. 54 der Dematrixschaltung 47 zugeführt werden. Am Ausgang der Schaltung 47 treten dann an den Klemmen 55, 56 und 57 die Farbsignale R, G und B dauernd und gleichzeitig auf.

Die Impulsschaltung 44 liefert an die Schaltung 50 über die Leitungen 58 und 59 und ggf. weitere Leitungen Impulse zur Steuerung zeitlich bedingter Vorgänge. Die Schaltung 44 wird dazu durch Signale synchronisiert, die von der Klemme 41 ihrem Eingang 60 zugeführt werden. Ein anderer Ausgang 61 liefert die Steuergrösse für die Betätigung des Umschalters 43.

Auch in der Schaltung nach Fig. 3 kann die Polaritätswechselschaltung 49 an einer anderen Stelle des Übertragungsweges für die Farbdifferenzsignale eingeschaltet sein, z.B. vor dem Ausgang 48 oder vor den Ausgängen 51 und 52 oder hinter den Eingängen 53 und 54 in der Matrixschaltung 47.

Eine weitere Verbesserung des Rauschens ist möglich, wenn der Aussteuerungsbereich der Farbdifferenzsignale 5 über den Schwarzpegel entsprechend der Linie 3 hinaus bis zum Synchronpegelniveau 7 ausgedehnt wird. Ggf. ist auch eine Verschiebung derart möglich, dass die in Fig. 1 an der Linie 4 anliegenden Pegel für die hellen Farben etwa um den Abstand zwischen der Linie 3 und der den Synchronpegeln entsprechenden Linie 7 nach links verschoben werden. Dann können zwar in der Austastzeit auch Farbdifferenzsignale im Synchronimpulsbereich auftreten. Wenn jedoch wie üblich ein Synchronimpuls diesen Farbdifferenzsignalen vorangeht und eine Synchronisierung auf die Vorderflanke der Synchronimpulse erfolgt, ist dennoch eine exakte Synchronisierung möglich.

**Patentansprüche**

1. Schaltungsanordnung zum Aufzeichnen eines aus einem Helligkeitssignal (2) und zwei abwechselnd übertragenen Farbdifferenzsignalen (5) bestehenden Farbvideosignals durch Frequenzmodulation auf einem Träger, insbesondere einem Magnetband, wobei die Aufzeichnung im Bereich der abfallenden Flanke der Frequenz-

Amplituden-Übertragungskurve (1) erfolgt, dadurch gekennzeichnet, dass die Farbdifferenzsignale (R-Y und B-Y) (5) mit negativer Polarität derart aufgezeichnet werden, dass die Amplitudenwerte der hellen Farben wie Gelb, Cyan und Grün bei einem höheren Frequenzwert und damit bei niedrigeren Werten der Frequenz-Amplituden-Übertragungskurve (1) aufgezeichnet werden, und dass die dunkleren Farben wie Purpur, Rot und Blau bei höheren Werten der Frequenz-Amplituden-Übertragungskurve (1) aufgezeichnet werden.

2. Schaltungsanordnung nach Anspruch 1, dadurch gekennzeichnet, dass vor dem Aufzeichnen die Polarität der einer Matrixschaltung (14) entnommenen Farbdifferenzsignale (5) umgekehrt und ggf. der Mittelwert in Richtung zu höheren Aufzeichnungsfrequenzen hin additiv verschoben wird.

3. Schaltungsanordnung zu Wiedergabe eines nach einem der Ansprüche 1 oder 2 aufgezeichneten Signale, dadurch gekennzeichnet, dass die vom Aufzeichnungsträger abgenommenen Farbdifferenzsignale (5) über eine Polaritätsumkehrstufe (49) einer Dematrixschaltung (47) zugeführt werden.

## Claims

1. A circuit arrangement for recording a colour video signal, which signal comprises a luminance signal (2) and two alternately transmitted colour-difference signals (5), on a record carrier, in particular a magnetic tape, by frequency modulation, recording being effected in the range of the falling portion of the frequency-amplitude transmission curve (1), characterized in that the colour-difference signals (R-Y) and (B-Y) (5) are recorded with negative polarity in such a way that the amplitude values of bright colours such as yellow, cyan and green are recorded at a higher frequency value and, consequently, at lower values of the frequency-amplitude transmission curve (1), and darker colours such as purple, red and blue are recorded at higher values of the frequency-amplitude transmission curve (1).

2. A circuit arrangement as claimed in Claim 1, characterized in that before recording the polarity of the colour-difference signals (5) supplied by a matrix circuit (14) is inverted and, as the case may be, the average value is additionally shifted towards the higher recording frequencies.

3. A circuit arrangement for reproducing a signal recorded by means of an arrangement as claimed in Claim 1 or 2, characterized in that the colour-difference signals (5) originating from the record carrier are applied to a dematrixing circuit (47) *via* a polarity-inverter stage (49).

## Revendications

1. Circuit d'enregistrement par modulation de fréquence sur un support, notamment une bande magnétique, d'un signal vidéo couleur constitué par un signal de luminance (2) et deux signaux de différence de couleur (5) transmis en alternance, l'enregistrement étant effectué au niveau du flanc descendant de la courbe de transmission fréquence-amplitude (1), caractérisé en ce que les signaux de différence de couleur (R-Y) et (B-Y) (5) sont enregistrés avec la polarité négative de telle manière que les valeurs d'amplitude des couleurs claires telles que le jaune, le cyan et le vert soient enregistrées à une valeur de fréquence plus élevée et, par conséquent, à des valeurs plus faibles de la courbe de transmission fréquence-amplitude (1) et que les couleurs foncées telles que le pourpre, le rouge et le bleu soient enregistrées à des valeurs plus élevées de la courbe de transmission fréquence-amplitude (1).

2. Circuit selon la revendication 1, caractérisé en ce que, avant l'enregistrement, la polarité des signaux de différence de couleur (5) fournis par un circuit de matriçage (14) est inversée et en ce que, le cas échéant, la valeur moyenne est décalée, en outre, vers les fréquences d'enregistrement plus élevées.

3. Circuit de lecture d'un signal enregistré au moyen d'un circuit selon l'une des revendications 1 ou 2, caractérisé en ce que les signaux de différence de couleur (5) provenant du support d'information sont appliqués à un circuit de dématriçage (47) à travers un étage (49) inverseur de la polarité.

Fig. 1

Fig.2

Fig.3